# EUROPÄISCHE PATENTSCHRIFT

(11) **EP 3 015 851 B1**
(45) Veröffentlichungstag und Bekanntmachung des Hinweises auf die Patenterteilung: **26.04.2017**
(21) Anmeldenummer: 15191792.9
(22) Anmeldetag: 28.10.2015
(51) Int. Cl.: G01N 21/88, B29C 70/38, G01N 21/84

(54) **LEGEKOPF, FASERLEGEVORRICHTUNG UND VERFAHREN**
LAYING HEAD, FIBRE LAYING DEVICE AND METHOD
TETE D'APPLICATION, DISPOSITIF D'APPLICATION DE FIBRE ET PROCEDE

(30) Priorität: 28.10.2014 DE 102014015831
(43) Veröffentlichungstag der Anmeldung: 04.05.2016
(73) Patentinhaber: Airbus Defence and Space GmbH, 85521 Ottobrunn (DE)
(72) Erfinder: Engel, Franz, 81539 München (DE)
(74) Vertreter: Isarpatent

(56) Entgegenhaltungen:
- EP-A1- 1 857 260
- EP-A2- 2 072 224
- WO-A1-2012/164184
- US-A1- 2011 017 380

## Beschreibung

Die Erfindung betrifft einen Legekopf für eine Faserlegevorrichtung, eine Faserlegevorrichtung nach dem Oberbegriff des Patentanspruchs 10 sowie ein Verfahren zur Untersuchung eines mit einer Faserlegevorrichtung gefertigten Bauteils nach dem Oberbegriff des Anspruchs 11.

Faserverbundmaterial, insbesondere in der Luftfahrtindustrie, wie etwa Außenhautelemente für Flugzeuge, wird häufig mit automatisierten Faserablegevorrichtungen hergestellt, die als AFP-Maschinen ("automated fiber placement") bezeichnet werden. Dabei werden relativ schmale Streifen von Fasern, insbesondere Kohlenstofffasern (auch "Carbonfasern" genannt), die in einer Kunststoffmatrix eingebettet sind, auf ein zu fertigendes Bauteil bzw. ein entsprechendes Werkzeug aufgebracht. Diese Faserbänder werden entlang eines vorgegebenen Pfads auf der dreidimensional geformten Werkzeugoberfläche abgelegt.

Um ein Bauteil zu fertigen, ist eine Vielzahl einzelner Ablegeschritte notwendig. Bei diesen kann eine Reihe von Ablegeeffekten auftreten, wie etwa ungewollte Überlappung der einzelnen Faserbänder, Lücken zwischen diesen oder etwa Welligkeiten. Diese Ablegeeffekte können gegebenenfalls die mechanischen Eigenschaften des fertigen Bauteils beeinflussen und sollen daher vor dem Einsatz des Bauteils erkannt werden. Herkömmlicherweise werden daher AFP-gefertigte Bauteile von Personal während der Herstellung untersucht. Dabei wird nach jeder aufgebrachten Faserlage optisch die Qualität der Faserlage aus den einzelnen Faserbändern bzw. der Lage zueinander kontrolliert. Dies ist zeit- und arbeitsaufwändig, personalintensiv und insbesondere bei Carbonfasern wegen des geringen Kontrasts nicht mit hoher Sicherheit möglich. So sind Lücken zwischen Bändern schwer zu entdecken, da die schwarzen Carbonfasern bereits auf mehreren Lagen weiterer Carbonfasern liegen, so dass die Lücke farblich nicht auffällt.

Es wurden daher Sensoren vorgeschlagen, die in einem gewissen lateralen Abstand zum Legekopf die frisch abgelegten Faserbänder abtasten. Dabei besteht der Nachteil, dass Fehler nicht erkannt werden, wenn insbesondere Krümmungen in der Bauteiloberflächenebene gelegt werden, denn ein hinter dem Legekopf hinterher eilender Sensor kann in diesem Fall außerhalb des zu untersuchenden Bereichs liegen. Weiterhin müssen Untersuchungsergebnisse wiederum aufwändig und personalintensiv gesichtet und ausgewertet werden. Auch ist der Platzbedarf für Sensoren am Legekopf nicht unerheblich, wodurch der Bauraum des Legekopfs und seine Bewegungsfreiheit eingeschränkt sind.

Mehrere Dokumente (EP1857260, WO2012164184, US20110017380, EP2072224) offenbaren die Untersuchung durch ein Laserlicht und ein Sensor.

Aufgabe der vorliegenden Erfindung ist, ein Verfahren zur Untersuchung eines AFPgefertigten Bauteils, das die vorgenannten Nachteile beseitigt und eine Faserlegevorrichtung, mit der dieses Verfahrens durchgeführt werden kann, vorzuschlagen.

Diese Aufgabe wird gelöst durch einen Legekopf mit den Merkmalen des Patentanspruchs 1, eine Faserlegevorrichtung mit den Merkmalen des Patentanspruchs 10, sowie ein Verfahren mit den Merkmalen des Patentanspruchs 11.

Der erfindungsgemäße Legekopf für eine Faserlegevorrichtung ist insbesondere zur Faserablage nach dem AFP-Verfahren geeignet. Erfindungsgemäß weist der Legekopf eine Ablegerolle auf, die für ein Laserlicht zumindest teilweise durchlässig ist. Dies ermöglicht, ein Bauteil, das mit dem Legekopf gefertigt wird, aus einem Innenraum der Ablegerolle heraus in-situ, also während der Fertigung, auf Defekte zu untersuchen. Im Innenraum der Ablegerolle sind eine Laserlichtzuführeinheit und ein Sensor angeordnet. Der Sensor ist ausgebildet und angeordnet, vom Bauteil, auf dem die Ablegerolle ein Faserband ablegt, reflektiertes Laserlicht zu empfangen.

Der Legekopf beseitigt gemäß der Erfindung den Nachteil, dass ein Sensor aus geometrischen Gründen nicht jede Stelle einer Faserverbundstruktur untersuchen kann. Durch die für ein Laserlicht zumindest teilweise durchlässige Ablegerolle (im Folgenden auch nur einfach "transparente Ablegerolle" genannt) ist es möglich, ein Faserband unmittelbar nach seiner Ablage oder sogar währenddessen zu untersuchen. Im Gegensatz zum Stand der Technik, bei der ein Sensor dem Legekopf hinterher eilt, ist somit auch bei Krümmungen in der Bauteiloberflächenebene der zu untersuchende Bereich auf der Bauteiloberfläche stets im Blickfeld des Sensors. Der Legekopf ermöglicht eine Untersuchung des Bauteils bzw. Faserbands ohne aufwändigen Einsatz von Personal, da sie automatisierbar ist. Durch die Integration eines Sensors in den Innenraum der Ablegerolle wird der Legekopf hinsichtlich Bauraum und Bewegungsfreiheit nicht eingeschränkt.

In einer Ausführungsform ist im Innenraum der Ablegerolle ein Spiegel angeordnet, um das Laserlicht von der Laserlichtzuführeinheit in einem vorbestimmten Winkel zum Bauteil zu lenken. Dadurch lässt sich vorteilhaft erreichen, dass ein Winkel zwischen Laserlicht, das auf das Bauteil einstrahlt und zwischen Laserlicht, das vom Bauteil reflektiert wird, größer ist als ohne Spiegel. Dies kann vorteilhaft sein, wenn der Sensor mit Hilfe des reflektierten Laserlichts ein Höhenprofil des Bauteils erfasst.

Vorteilhaft weist der Sensor einen CCD-Sensor auf. CCD-Sensoren ("charge-coupled device"), die üblicherweise in Kameras eingesetzt werden, werden auch einfach "Kamerachips" genannt. Diese sind in kleinen Formaten verfügbar, so dass der begrenzte Innenraum der Ablegerolle dafür ausreicht.

Der Sensor kann derart dimensioniert sein, dass beispielsweise unter Berücksichtigung eines Reflexionswinkels, in dem reflektiertes Laserlicht vom Bauteil auf den Sensor fällt vom Bauteil reflektiertes Licht im Wesentlichen vom Sensor aufgefangen wird. "Im Wesentlichen" bedeutet im Rahmen der Erfindung, dass genügend vom Bauteil reflektiertes Licht vom Sensor aufgefangen wird, um Informationen aus der vom Laserlicht bestrahlten Fläche zu erhalten. Diese Informationen können beispielsweise das Höhenprofil der bestrahlten Fläche beinhalten.

Insbesondere bei einer Anordnung, bei der das reflektierte Licht in einem besonders flachen Winkel auf den Sensor fällt, kann es vorteilhaft sein, wenn der Sensor auf mehreren nebeneinander angeordneten Sensoren aufgebaut ist oder einen entsprechend großes Verhältnis von Länge zu Breite aufweist.

Nach einem Aspekt der Erfindung ist als Laserlichtzuführeinrichtung ein Laser im Innenraum der Ablegerolle angeordnet. Dadurch wird ein einfacher Aufbau erzielt.

Nach einem anderen Aspekt kann ein Laser außerhalb der Ablegerolle angeordnet sein. In diesem Fall ist von dem Laser ausgesandtes Laserlicht über die Laserlichtzuführeinheit auf eine Innenseite der Ablegrolle lenkbar. Entsprechend ist das Laserlicht auf das zu untersuchende Bauteil lenkbar. Beispielsweise kann in diesem Fall die Laserlichtzuführeinheit einen Spiegel oder Glasfasern aufweisen.

Nach einer Variante des Legekopfes ist im Innenraum der Ablegerolle eine Optik angeordnet, die geeignet ist, vom Bauteil reflektiertes Laserlicht auf den Sensor zu lenken. So kann etwa ein Spiegel nach Wunsch und/oder Bedarf das Laserlicht ablenken, um den Raum im Innenraum optimal auszunutzen oder um einen vorteilhaften Einfallwinkel des Lichts in den Sensor zu erzielen. Andererseits kann eine Strahlaufweitung oder -bündelung erwünscht sein. Es ist auch denkbar, dass die Optik derartig ausgebildet und angeordnet ist, dass der Sensor außerhalb des Innenraums positioniert werden kann.

Der Begriff "Faserband" entspricht den typischerweise beim AFP-Verfahren verwendeten Geometrien. Er ist jedoch im Rahmen der Erfindung nicht beschränkend zu sehen. So können damit sämtliche Geometrien von Fasern, die in eine Kunststoffmatrix eingebettet sind, gemeint sein. Derartige flächige Kunststoff-Faser-Gebilde beinhalten Rovings, Garne, UD-Komposite, Prepregs oder ähnliche in der Faserverbundtechnologie übliche Halbzeuge.

Die Laserlichtzuführeinrichtung, der Sensor und gegebenenfalls der Spiegel und/oder die Optik sind insbesondere derart angeordnet, dass sie unabhängig von der Rotation der Ablegerolle gelagert sind. Dies wird bevorzugt dadurch erreicht, dass die genannten Teile ortsfest mit dem Legekopf verbunden sind.

Vorzugsweise enthält die Ablegerolle ein flexibles Material oder ist aus diesem gefertigt. Dies kann für die Ablage bzw. ein Andrücken des Faserbands auf das Bauteil vorteilhaft sein.

An der Ablegerolle, insbesondere im Innenraum der Ablegerolle, kann außerdem ein Winkelsensor und/oder ein Lagesensor angeordnet sein, der geeignet ist, einen Winkel und/oder eine Lage des Faserbands (2) zu erkennen. Ein Signal des Winkel- und/oder Lagesensors kann genutzt werden, um den Sensor bzw. den Laser zu triggern.

Die Aufgabe der Erfindung wird des Weiteren mit einer Faserlegevorrichtung nach Anspruch 10 gelöst.

Eine erfindungsgemäße Faserlegevorrichtung weist einen erfindungsgemäßen Legekopf auf. Die Faserlegevorrichtung kann eine Vorrichtung zur automatisierten Faserablage nach dem AFP-Verfahren sein. Eine erfindungsgemäße Faserlegevorrichtung besitzt nicht nur die bekannten Vorteile zur Herstellung eines faserverstärkten Faserverbundteils, sondern ist darüber hinaus in der Lage, in-situ, also direkt während der Fertigung des faserverstärkten Faserverbundteils dieses auf mögliche Defekte zu untersuchen. Diese Defekte können Lücken, Überlappungen, Wellungen oder weitere übliche Defekte sein.

Weiterhin wird die Aufgabe durch ein Verfahren nach Anspruch 11 gelöst.

Bei dem erfindungsgemäßen Verfahren zur Untersuchung eines mit einer Faserlegevorrichtung gefertigten Bauteils wird Laserlicht aus einem Innenraum einer für dieses Laserlicht zumindest teilweise durchlässigen Ablegerolle auf ein von einer Ablegerolle auf ein Bauteil bzw. Werkzeug abgelegtes Faserband gestrahlt und reflektiertes Licht mit einem Sensor aufgefangen. Das Bauteil wird vorzugsweise mit einer Faserlegevorrichtung hergestellt, das nach dem AFP-Verfahren arbeitet, insbesondere mit einer Faserlegevorrichtung, die einen erfindungsgemäßen Legekopf enthält. Somit sollen alle Merkmale, die hinsichtlich der Funktionsweise des erfindungsgemäßen Legekopfs bzw. der erfindungsgemäßen Faserlegevorrichtung erläutert wurden auch für das erfindungsgemäße Verfahren als offenbart gelten.

Bevorzugt wird das reflektierte Licht auf ein Höhenprofil des Bauteils hin ausgewertet. Dies ermöglicht besonders gut, mögliche Defekte im abgelegten Faserband, zwischen zwei oder mehreren abgelegten Faserbändern oder sonst irgendwie im Bauteil zu erkennen.

Nach einer vorteilhaften Variante wird das Laserlicht derart auf das abgelegte Faserband gestrahlt, dass zu dem abgelegten Faserband benachbarte Bereiche mit bestrahlt werden. Somit sind Defekte, die nicht nur das aktuell abgelegte Faserband betreffen, sondern solche zwischen zwei oder mehreren abgelegten Faserbändern oder sonst irgendwie im Bauteil besonders gut zu identifizieren.

Des Weiteren können das Ausstrahlen und/oder das Auffangen des Laserlichts mittels des Lasers bzw. des Sensors durch den Lagesensor und/oder den Winkelsensor getriggert werden.

Sonstige vorteilhafte Ausführungsformen der vorliegenden Erfindung sind Gegenstand weiterer Unteransprüche.

Weitere Ausführungsformen und Vorteile der Erfindung werden im Folgenden an einem bevorzugten Ausführungsbeispiel anhand einer schematischen Darstellung näher erläutert.

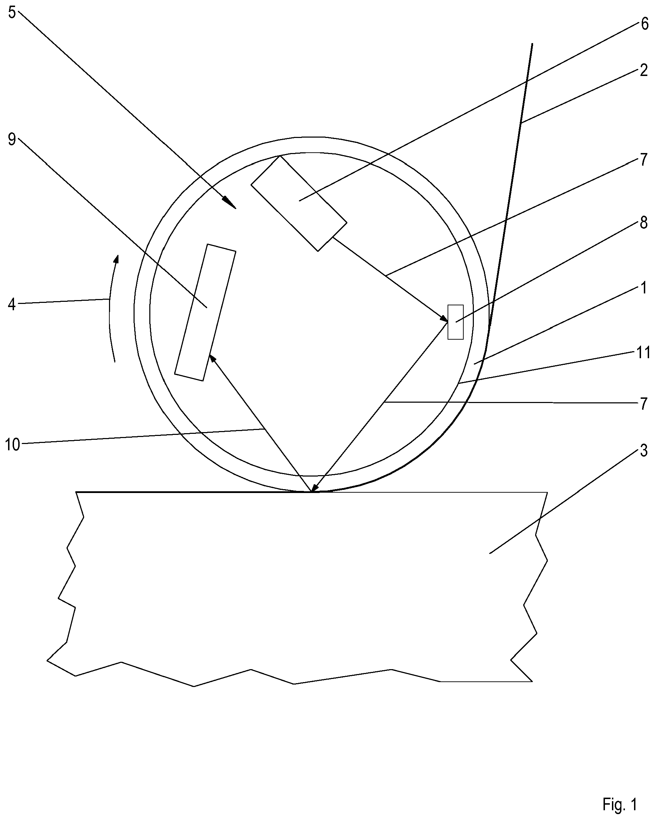

Die einzige Figur zeigt schematisch einen Querschnitt durch eine Ablegerolle des erfindungsgemäßen Legekopfs, die gerade ein Faserband ablegt.

Die Figur zeigt diejenigen Teile eines erfindungsgemäßen Legekopfes, die für die Erfindung relevant sind. Eine transparente Ablegerolle 1 legt ein Faserband 2 aus Carbonfasern auf ein Bauteil 3 ab. Dabei rotiert die Ablegerolle 1 in Pfeilrichtung 4 und drückt das Faserband 2 während des Ablegens mit einem gewissen Druck auf das Bauteil 3. Je nachdem, welches Material für die Kunststoffmatrix eingesetzt wird, in der sich die Fasern befinden, also etwa ein thermoplastisches oder duroplastisches Kunststoffmaterial, können entsprechend eingestellte (nicht dargestellte) Heizeinrichtungen ein Aushärten oder Konsolidieren des Matrixmaterials im Anschluss an das Ablegen bewirken.

In einem Innenraum 5 der Ablegerolle 1 ist ein Laser 6 angeordnet, der Laserlicht 7 auf einen Spiegel 8 aussendet, das von diesem reflektiert wird und auf eine Innenseite 11 der Ablegerolle und anschließend auf das Bauteil 3 trifft. Das Laserlicht 7 trifft in einem Bereich auf das Bauteil 3, in dem unmittelbar zuvor das Faserband 2 das Bauteil 3 berührt hat und auf dem es durch die Klebrigkeit des Faserbands 2 und den Anpressdruck der Ablegerolle 1 haften geblieben ist.

In diesem Ausführungsbeispiel ist der Bereich, in dem das Faserband abgelegt wurde, direkt benachbart zu einem weiteren Faserband, das parallel zu dem aktuellen Faserband 2 abgelegt wurde. Die vorgesehene Geometrie der Faserablage ist derart, dass die beiden Faserbänder ohne Zwischenraum nebeneinander zu liegen kommen. Das zuerst ablegte Faserband ist in der Seitenansicht der Figur nicht zu erkennen.

Das Laserlicht 7 wird von dem Bereich des Bauteils 3, in dem es auftrifft, nach den optischen Gesetzen in einem entsprechenden Winkel reflektiert und trifft auf einen Sensor 9. Der Sensor 9 ist in diesem Ausführungsbeispiel ein CCD-Sensor, wie er in Kameras üblich ist. Er ist in der Lage, das reflektierte Licht 10 örtlich aufgelöst und hinsichtlich eines Höhenprofils zu empfangen und zu einer Auswertung an eine geeignete Auswerteeinheit (nicht dargestellt) weiterzugeben.

In diesem Beispiel ist zwischen dem aktuell abgelegten Faserband 2 und dem zuvor abgelegten Faserband eine Lücke, die größer ist als ein vorgegebener Schwellenwert. Dies wird von der Auswerteeinheit entsprechend dem örtlich aufgelösten Höhenprofil erkannt. Nun kann entsprechend auf diesen erkannten Defekt reagiert werden.
Der Laser 6, der Spiegel 8 und der Sensor 10 sind derart im Innenraum 5 der Ablegerolle 1 angeordnet, dass sie unabhängig von der Rotation der Ablegerolle 1 gelagert sind. Dies wird dadurch erreicht, dass die genannten Teile ortsfest mit dem Legekopf verbunden sind.

Dadurch ist die optische Überwachung möglicher Defekte am Bauteil 3 immer auf denjenigen Bereich gerichtet, in dem aktuell ein Faserband 2 abgelegt worden ist. Das gleiche gilt entsprechend für diejenigen Teile, die gegebenenfalls zusätzlich oder alternativ anstelle des Lasers 6, des Spiegels 8 und des Sensors 10 im Innenraum 5 der Ablegerolle 1 angeordnet sind.
Derartige zusätzliche oder alternative Teile sind gemäß Varianten des Ausführungsbeispiels zum einen Glasfasern, durch die das Laserlicht in den Innenraum 5 der Ablegerolle 1 geleitet wird. Bei dieser Variante ist der Laser an beliebiger Stelle am Legekopf angeordnet. Zum anderen können Optiken eingesetzt werden, die das Laserlicht 7, 8 an verschiedenen Stellen manipulieren. Derartige Manipulationen können Aufweitungen oder Bündelungen des Laserstrahls sein, sowie Ab- und Umlenkungen. Dies kann je nach Wunsch und Bedarf geschehen, um den Platz im Innenraum 5 der Ablegerolle 1 optimal zu nutzen, und um die Auflösung, Tiefenschärfe bzw. Genauigkeit der optischen Überwachung zu optimieren. Derartige Optiken sind bekannt und werden hier nicht näher ausgeführt.

Das Material der Ablegerolle 1 ist für Wellenlängen des Laserlichts 7, das vom Laser 6 ausgesandt wird, zumindest teilweise durchlässig. Weitere Eigenschaften des Materials können eine gewisse Elastizität und eine Temperaturbeständigkeit sein. Je nach der von gegebenenfalls vorhandenen Heizeinrichtungen erzeugten Temperatur sollte das Material seine mechanischen und optischen Eigenschaften bei Erwärmung weitestgehend beibehalten. Geeignete Materialien können Kunststoffe, wie etwa Polyol, Polyethylen, Polycarbonat, Polymethylmethacrylat, sein oder Gläser bzw. Kristalle, z.B. Siliziumdioxid.

### Bezugszeichenliste

- 1: Ablegerolle
- 2: Faserband
- 3: Bauteil, Werkzeug
- 4: Pfeilrichtung, Rotationsrichtung der Ablegerolle
- 5: Innenraum
- 6: Laserlichtzuführeinrichtung, Laser, Glasfaser
- 7: Laserlicht
- 8: Spiegel
- 9: Sensor
- 10: reflektiertes Laserlicht
- 11: Innenseite der Ablegerolle

## Patentansprüche

1. Legekopf für eine Faserlegevorrichtung, insbesondere zur Faserablage nach dem AFP-Verfahren, aufweisend eine Ablegerolle, die für ein Laserlicht zumindest teilweise durchlässig ist, eine Laserlichtzuführeinheit (6), die in einem Innenraum (5) der Ablegerolle (1) angeordnet ist und einen Sensor (9), der ausgebildet und angeordnet ist, von einem Bauteil (3), auf dem die Ablegerolle (1) ein Faserband (2) ablegt, reflektiertes Laserlicht (10) zu empfangen.

2. Legekopf nach Anspruch 1, **dadurch gekennzeichnet, dass** im Innenraum (5) der Ablegerolle (1) ein Spiegel (8) angeordnet ist, um das Laserlicht (7) von der Laserlichtzuführeinheit (6) in einem vorbestimmten Winkel zum Bauteil (3) zu lenken.

3. Legekopf nach Anspruch 1 oder 2, **dadurch gekennzeichnet, dass** der Sensor (9) einen CCD-Sensor aufweist.

4. Legekopf nach Anspruch 3, **dadurch gekennzeichnet, dass** der Sensor (9) derart dimensioniert ist, dass vom Bauteil (3) reflektiertes Licht im Wesentlichen vom Sensor (9) aufgefangen wird.

5. Legekopf nach zumindest einem der vorhergehenden Ansprüche, **dadurch gekennzeichnet, dass** als Laserlichtzuführeinrichtung (6) ein Laser im Innenraum (5) der Ablegerolle (1) angeordnet ist.

6. Legekopf nach zumindest einem der Ansprüche 1 bis 4, **dadurch gekennzeichnet, dass** ein Laser außerhalb der Ablegerolle (1) angeordnet ist, und dass von dem Laser ausgesandtes Laserlicht über die Laserlichtzuführeinheit (6) auf eine Innenseite (11) der Ablegrolle (1) lenkbar ist.

7. Legekopf nach Anspruch 6, **dadurch gekennzeichnet, dass** die Laserlichtzuführeinheit (6) einen Spiegel oder Glasfasern aufweist.

8. Legekopf nach zumindest einem der vorhergehenden Ansprüche, **dadurch gekennzeichnet, dass** im Innenraum (5) der Ablegerolle (1) eine Optik angeordnet ist, die geeignet ist, vom Bauteil (3) reflektiertes Laserlicht (10) auf den Sensor (9) zu lenken.

9. Legekopf nach zumindest einem der vorhergehenden Ansprüche, **dadurch gekennzeichnet, dass** die Ablegerolle (1) ein flexibles Material enthält, insbesondere aus diesem gefertigt ist.

10. Legekopf nach zumindest einem der vorhergehenden Ansprüche, **dadurch gekennzeichnet, dass** an der Ablegerolle (1) ein Winkelsensor und/oder eine Lagesensor angeordnet ist, der geeignet ist, einen Winkel und/oder eine Lage des Faserbands (2) zu erkennen.

11. Faserlegevorrichtung, insbesondere zur automatisierten Faserablage nach dem AFP-Verfahren, aufweisend einen Legekopf nach einem der Ansprüche 1 bis 10.

12. Verfahren zur Untersuchung eines mit einer Faserlegevorrichtung gefertigten Bauteils, insbesondere mit einer Faserlegevorrichtung nach Anspruch 11, **dadurch gekennzeichnet, dass** Laserlicht (7) aus einem Innenraum (5) einer für dieses Laserlicht zumindest teilweise durchlässigen Ablegerolle (1) auf ein von der Ablegerolle (1) auf ein Bauteil bzw. Werkzeug (3) abgelegtes Faserband (2) gestrahlt wird und reflektiertes Licht (10) von einem Sensor (9) aufgefangen wird.

13. Verfahren nach Anspruch 12, **dadurch gekennzeichnet, dass** das reflektierte Licht (10) auf ein Höhenprofil des Bauteils (3) hin ausgewertet wird.

14. Verfahren nach Anspruch 12 oder 13, **dadurch gekennzeichnet, dass** das Laserlicht (7) derart auf das abgelegte Faserband (2) gestrahlt wird, dass zu dem abgelegten Faserband (2) benachbarte Bereiche mit bestrahlt werden.

15. Verfahren nach zumindest einem der Ansprüche 12 bis 14, **dadurch gekennzeichnet, dass** das Ausstrahlen und/oder das Auffangen des Laserlichts durch einen Lagesensor und/oder einen Winkelsensor getriggert wird, die eine Lage und/oder einen Winkel des abgelegten Faserbands (2) erkennen können.

## Claims

1. Laying head for a fibre-laying device, in particular for laying fibre by AFP, comprising a laying roller which is transparent at least in part to a laser light, a laser light supply unit (6) which is arranged in an interior (5) of the laying roller (1), and a sensor (9) which is formed and arranged to receive laser light (10) reflected by a component (3) on which the laying roller (1) lays a fibre band (2).

2. Laying head according to claim 1, **characterised in that** a mirror (8) is arranged in the interior (5) of the laying roller (1) so as to deflect the laser light (7) from the laser light supply unit (6) at a predetermined angle with respect to the component (3).

3. Laying head according to either claim 1 or claim 2, **characterised in that** the sensor (9) comprises a CCD sensor.

4. Laying head according to claim 3, **characterised in that** the sensor (9) is dimensioned in such a way that light reflected by the component (3) is substantially captured by the sensor (9).

5. Laying head according to at least one of the preceding claims, **characterised in that** a laser is arranged in the interior (5) of the laying roller (1) as a laser light supply means (6).

6. Laying head according to at least one of claims 1 to 4, **characterised in that** a laser is arranged outside the laying roller (1), and **in that** laser light emitted by the laser can be deflected onto an inner face (11) of the laying roller (1) via the laser light supply unit (6).

7. Laying head according to claim 6, **characterised in that** the laser light supply unit (6) comprises a mirror or glass fibres.

8. Laying head according to at least one of the preceding claims, **characterised in that** optics, suitable for deflecting laser light (10) reflected by the component (3) onto the sensor (9), are arranged in the interior (5) of the laying roller (1).

9. Laying head according to at least one of the preceding claims, **characterised in that** the laying roller (1) contains a flexible material, in particular being made thereof.

10. Laying head according to at least one of the preceding claims, **characterised in that** an angle sensor and/or a position sensor, suitable for detecting an angle and/or a position of the fibre band (2), are arranged on the laying roller (1).

11. Fibre-laying device, in particular for automated fibre-laying by AFP, comprising a laying head according to any of claims 1 to 10.

12. Method for analysing a component made using a fibre-laying device, in particular using a fibre-laying device according to claim 11, **characterised in that** laser light (7) from an interior (5) of a laying roller (1), which is transparent at least in part to this laser light, is radiated onto a fibre belt (2) laid on a component or tool (3) by the laying roller (1), and reflected light (10) is captured by a sensor (9).

13. Method according to claim 12, **characterised in that** the reflected light (10) is evaluated for a height profile of the component (3).

14. Method according to either claim 12 or claim 13, **characterised in that** the laser light (7) is radiated onto the laid fibre band (2) in such a way that regions adjacent to the laid fibre band (2) are additionally irradiated.

15. Method according to at least one of claims 12 to 14, **characterised in that** the emission and/or capture of the laser light is triggered by a position sensor and/or an angle sensor which can detect a position and/or an angle of the laid fibre band (2).

## Revendications

1. Tête d'application pour un dispositif d'application de fibres, en particulier destiné au dépôt de fibres selon le procédé de placement automatique de fibres (AFP - Automated Fiber Placement), comportant un rouleau de dépôt, qui est au moins en partie perméable à la lumière laser, une unité d'alimentation en lumière laser (6), qui est disposée dans un espace intérieur (5) du rouleau de dépôt (1) et un capteur (9), qui est conçu et disposé pour recevoir de la lumière laser (10) réfléchie par un élément (3) sur lequel le rouleau de dépôt (1) dépose une bande de fibres (2).

2. Tête d'application selon la revendication 1, **caractérisée en ce qu'**un miroir (8) est disposé dans l'espace intérieur (5) du rouleau de dépôt (1) pour diriger la lumière laser (7) de l'unité d'alimentation en lumière laser (6) selon un angle prédéfini par rapport à l'élément (3).

3. Tête d'application selon la revendication 1 ou 2, **caractérisée en ce que** le capteur (9) comporte un capteur CCD.

4. Tête d'application selon la revendication 3, **caractérisée en ce que** le capteur (9) est dimensionné de telle manière que de la lumière réfléchie par l'élément (3) est captée pour l'essentiel par le capteur (9).

5. Tête d'application selon au moins une des revendications précédentes, **caractérisée en ce que**, en guise de moyen d'alimentation en lumière laser (6), un laser est disposé dans l'espace intérieur (5) du rouleau de dépôt (1).

6. Tête d'application selon au moins une des revendications 1 à 4, **caractérisée en ce qu'**un laser est disposé en dehors du rouleau d'application (1), et **en ce que** de la lumière laser émise par le laser peut être dirigée vers une face intérieure (11) du rouleau de dépôt (1) par le biais de l'unité d'alimentation en lumière laser (6).

7. Tête d'application selon la revendication 6, **caractérisée en ce que** l'unité d'alimentation en lumière laser (6) comporte un miroir ou des fibres de verre.

8. Tête d'application selon au moins une des revendications précédentes, **caractérisée en ce qu'**un dispositif optique, qui est adapté pour diriger de la lumière laser (10) réfléchie par l'élément (3) vers le capteur (9), est disposé dans l'espace intérieur (5) du rouleau de dépôt (1).

9. Tête d'application selon au moins une des revendications précédentes, **caractérisée en ce que** le rouleau de dépôt (1) contient un matériau flexible, et est en particulier fabriqué à partir de celui-ci.

10. Tête d'application selon au moins une des revendications précédentes, **caractérisée en ce qu'**un capteur angulaire et/ou un capteur de position, qui est adapté pour reconnaître un angle et/ou une position de la bande de fibres (2), est disposé sur le rouleau de dépôt (1).

11. Dispositif d'application de fibres, en particulier pour le dépôt automatique de fibres selon le procédé de placement automatique de fibres (AFP - Automated Fiber Placement), comportant une tête d'application selon l'une des revendications 1 à 10.

12. Procédé d'inspection d'un élément fabriqué au moyen d'un dispositif d'application de fibres, en particulier au moyen d'un dispositif d'application de fibres selon la revendication 11, **caractérisé en ce que** de la lumière laser (7) est émise depuis un espace intérieur (5) d'un rouleau de dépôt (1) perméable au moins en partie à cette lumière laser vers une bande de fibres (2) déposée par le rouleau de dépôt (1) sur un élément ou outil et de la lumière réfléchie (10) est captée par un capteur (9).

13. Procédé selon la revendication 12, **caractérisé en ce que** la lumière réfléchie (10) est évaluée en vue d'obtenir un profil de hauteur de l'élément (3).

14. Procédé selon la revendication 12 ou 13, **caractérisé en ce que** la lumière laser (7) est émise de telle manière vers la bande de fibres (2) déposée que des zones voisines de la bande de fibres (2) déposée sont également irradiées.

15. Procédé selon au moins une des revendications 12 à 14, **caractérisé en ce que** l'émission et/ou le captage de la lumière laser est déclenché(e) par un capteur de position et/ou un capteur angulaire, qui peuvent reconnaître une position et/ou un angle de la bande de fibres (2) déposée.
